# EUROPEAN PATENT SPECIFICATION

(11) **EP 3 844 581 B1**
(45) Date of publication and mention of the grant of the patent: **05.04.2023**
(21) Application number: 19790318.0
(22) Date of filing: 28.08.2019
(51) Int. Cl.: G05B 19/418, H04B 10/112, H04B 10/114

(54) **A METHOD FOR ACHIEVING TRACEABILITY OF A TOOL OPERATION**
VERFAHREN ZUM ERREICHEN DER VERFOLGBARKEIT EINES WERKZEUGBETRIEBS
PROCÉDÉ POUR RÉALISER LA TRAÇABILITÉ D'UNE OPÉRATION D'OUTIL

(30) Priority: 30.08.2018 SE 1830249
(43) Date of publication of application: 07.07.2021
(73) Proprietor: BEOTOP INNOVATION AB, 19272 Sollentuna (SE)
(72) Inventor: EDLUND, Björn, 19272 Sollentuna (SE)
(86) International application number: PCT/SE2019/050804
(87) International publication number: WO 2020/046195

(56) References cited:
- US-A1- 2009 202 254
- US-A1- 2015 253 766
- KULLANDER F ET AL: "Laser communication with modulated retro reflectors - progress report", F O I - R, TOTALFOERSVARETS FORSKNINGSINSTITUT, SE, 1 December 2006 (2006-12-01), pages 1-16, XP002550283, ISSN: 1650-1942

## Description

In the manufacturing industrial facilities, the operations that are performed on the 'workpieces' (i.e. parts and/or sub-parts eventually forming the final products) are from various sorts, like pressing, welding, painting, assembling etc. Typically, an operation is performed by at least one special tool, designed to be capable of performing a specific task. Examples of such tools are wrenches, fastening tools, riveting tools, paint nozzle tools, pressing tools, imprinting tools, stamping tools, drilling tools and others. The tools can be powered manually, electrically (from battery or mains) or pneumatically, as they perform their specific operations on workpieces. Furthermore, the tools can be handled manually, by a human operator, or by a machine or robot.

A key concept to achieve a desirable and reliable quality of the produced items, in all their details, is the level of control in the production. High level of control is reached when using well designed and controllable tools for specific purposes, having capability of storing operational data, and maintaining a low level of ambiguity. A sub-concept to the level of control in production is the level of traceability, i.e. the ability to know in detail what operations have been done on a workpiece and when.

A tool type that is commonly used in many different assembling production facilities, on many different applications, are power tools, so called 'nut runners', or 'fastening tools' where the actual operations are defined by fastening parts together via threaded joints. Such power tool system is known e.g. from D1: US 2002003043 (A1), which presents a portable electric power tool, connected via a power cable to an operation control device (controller). The controller constitutes an intelligent system that can be programmed for making the tool to behave in different ways.

In a large and advanced production facility where a tool system such as the one described in D1 is used, the controller also communicates with an upper level production system, partly to receive production data (also called 'build data') that defines the characteristic parameters for the tool settings adapted for the operation that the tool is about to perform. After an operation, result data is transferred from the tool's sensors, via the controller to the upper level production system for providing the desirable traceability regarding the performed operation.

Another embodiment of the tool system in D1 is a tool powered by a battery and equipped with an embedded control device and thus no "wired" connection to external control devices, but still with capability to wirelessly communicate operational tool data with external devices and an upper level production system. The wireless communication technology is normally radio based, such as WLAN, Bluetooth, Zigbee etc. Such radio-frequency, hereinafter referred to as RF, based communication has had an enormous development the past decades considering the high quantities of communicating devices, and the number of such devices in the industrial world is expected to increase further, not least due to the concept of 'internet-of-things' (lOT) which has become a subject of interest for many companies. RF communication, however, suffers from some problems which tend to increase as the number of RF communicating devices increases. Particularly in facilities where the radio traffic is dense, as in the environment of this invention, the problems of extensive use of RF communication can be discerned.

Symptoms of the mentioned problems are among others an increasing number of interference issues between the many electronic devices in facilities that are commonly communicating via RF based technologies.

Furthermore, the growing use of RF communication has led to an increasing number of cases where occupied frequency channels are causing problems for many companies and third-party suppliers working with RF communicating equipment in said facilities.

The task to find available effective frequency channels and/or the obligation to apply for licenses regarding the use of certain RF channels sometimes implies time consuming and thus costly circumstances. The extensive use of RF communication according to the popular WLAN standard resulted in the introduction of the 5 GHz band, due to the limitations of the 2,4 GHz band. In that process, extra bandwidth was made available. However, the 5 GHz band is also not limitless. In addition to that, the use of higher RF communication frequencies implies increasing signal strengths, which in combination with an increasing number of communicating devices in general may be suspected to affect the working environment for human operators in facilities negatively.

The disclosed invention aims to be a counter-measure to these challenges by using a non-RF based technology to focus on enabling data communication only when specific conditions are fulfilled. It states the importance of when and where data shall be interchanged, not just anytime and anywhere or 'as soon as possible'. Data communication related to traceability and control of tool operations is an example where such conditions can be stated. Traceability and control often require system knowledge of the whereabouts of the tool.

### PRIOR ART

In the following, some documents (D2-D4) will be referred to showing systems describing transmission of data between tools and other devices under specific conditions, using different technologies. In some of the documents (D3-D6) the described conditions refer to tool location.

D2: US 2016129569 (A1) presents a wireless tool system with a torque wrench that communicates wirelessly with another communication device. Data exchange may include parameter sets (production data) and the communication technology may be radio, such as zigbee.

A wireless positioning system known in the art is e.g. the European patent D3: EP 3036067 (A1), which discloses a power tool system (e.g. as in D1) with a sender unit attached to the tool, sending identity signals that are picked up by receivers within the local area, and data processing means to use these signals for determining where in space the tool is located. The technology used in this system is based on the sending of ultra-wideband signals.

One task for any tool positioning system is to identify parts or workpieces that shall be operated on. That could be done by marking them. One identifying marking method is already widely known in industrial applications since long time ago, and that consists of adding a label to a part which is readable by a reader. The label can consist of a OR code or a barcode etc. Here one technology used is data communication using Infra-Red (IR) light performed by IR scanners or similar. This label normally consists of information about the sub-part, such as the identity of it, type, colour or production batch etc. Normally, such a scanner is attached as an accessory to the tool or physically detached to it but still with capabilities to transfer the data to the tool system. By reading it, the identity or any other information of the sub-part can be attached to the result data that after the operation is being sent to upper level system. In more advanced systems, the barcode information can be sent to upper level system as a first step where it is processed, before sending down proper production data that shall be used by the tool for the next operation as a second step. In many such systems, the tool is disabled before the label is scanned (i.e. it is not possible to perform operations with the tool) but enabled afterwards. In this way it is believed that the level of control is increased, even if it does not tell explicitly whether the operations are performed on the correct operation points or not.

D4: DE 102006024904 (A1) is another document describing how the identity of a tool and additionally the identity of a storage location (where the tool resides) are retrieved by machine-readable identification techniques, conducted by a central computer.

Instead of using ultrasound trilateration, or barcode scanning technologies using IR or the near IR spectrum, gyroscopes and accelerometer based electronic devices are also used in the art for following how a tool is moving in "free air" which thus provides a method to determine the location. A document that presents a system using an inertia measurements unit (IMU) as the main method for determining the position of a tool is D5: WO 2006059927 (A1). This document presents a power tool that carries an IMU to enable an upper level system to track the tool's position when performing operations on objects on a production line. In D5, it is mentioned that for accuracy reasons it is necessary to calibrate the inertial navigation system repeatedly, for example by placing the tool at a reference position. The reference point can be a fixed position relative to the working site, or alternatively, stationary relative to the production line. In the latter case the calibration routine is exemplified by scanning a barcode on the object and simultaneously calibrate the inertia navigation system, where the barcode contains information about the object and said barcode is placed in a fixed position relative to the joints to be operated on, and the scanning is performed by a scanner mounted on the tool. Coordinates are stored together with the corresponding result data and since the physical distance relation between all operation points are known from CAD drawings etc., the system provides traceability as to which joints that are operated on.

Furthermore, D6: US US2015253766 (A1) is a document describing a tool location system where a tool is equipped with a camera and the location of said tool is determined based on images from said camera.

### SUMMARY OF THE INVENTION

The invention is set out in the appended set of claims.

### BRIEF DESCRIPTION OF THE DRAWINGS

FIG. 1 shows the environment of the invention, a working site, including a base station (10) with a light source (4) transmitting directional light to a Modulating Retro-Reflector (MRR) structure (9) on a tool (7), said tool is about to perform an operation on operation point (6a) on a workpiece (5) .
FIG. 2a-e show a couple of MRR structures consisting of arrays of corner cube reflectors and their Field of View (FOV).

### DETAILED DESCRIPTION OF THE INVENTION

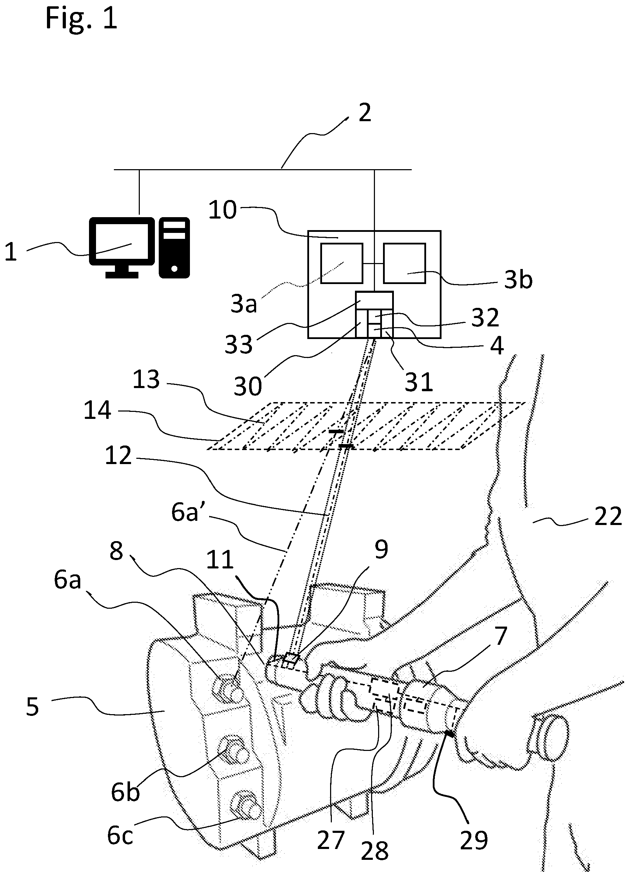

The overall environment of the invention is a manufacturing production facility where workpieces are worked upon in working sites by means of tools. Figure 1 shows the system setup of the invention in said working site: A workpiece (5) is to be worked upon by means of a tool (7), here held by a human operator (22), aiming to perform specific operations on specific operation points (6a, 6b, 6c). An upper level production system (1) is connected to a base station (10) via a network (2). Said base station (10) includes data processing means (3a), data memory means (3b) and furthermore a directional light source (4) such as a laser transmitting light of e.g. the near infrared and/or light in the visible spectrum. The light source (4) is preferably embedded in said base station (10) with Electronic Distance Measuring (EDM) means (31) and theodolite means (30) together with steering means (33) and a light sensor (32). If activating the tool trigger (29), the tool (7) performs an operation at its operation end (8) if said tool is configured to do so. The kind of operation that is performed can be of various sorts as the present invention is not limited to a certain type of tool operations. However, important is that said tool (7) contains at least one sensor for producing data that carries result information on the performed tool operation. Said tool also comprises processing means (28) and memory means (27). Furthermore, and crucial to the invention, said base station (10) and said tool (7) have means for transferring data between each other via a Free Space Optical (FSO) communication link. A light source in the base station serves as the interrogating part and an MRR structure (9) on the tool (7) is the other part of said link. The light source being the interrogating part of the FSO communication link is preferably the same light source as the mentioned light source (4), as is described by fig. 1 and as is described in the following text, but it could also be another light source located close to it.

One object of the present invention is to come to terms with interference related problems caused by extensive use of RF based data communication technologies in industrial environments such as between a mobile tool and stationary communication devices as in said system setup. To this end, data is interchanged only when specific conditions are fulfilled, and such conditions can be found in a working site as in the environment of the invention. A tool such as said tool (7) needs to report its operational result data to external devices after an operation, normally the sooner the better for an upper level production system (1) to have quickest possible updated status information on said tool operation. Furthermore, the tool needs to be programmed, or configured, with correct production data prior to an operation to perform said operation correctly. However, since tool movements often are suffering from ambiguity to some degree, the verification of correct production data in said tool is preferably done as close in time before each operation as possible. Thus, by involving the art of determining the position of a tool, the traceability and even the control of the tool operations are achieved through the very use of the FSO communication technique, as the sending and receiving of data occur only under very specific conditions, direction- and space -wise as well as timewise.

An ability of data communication via light, known as FSO communication technology, is to send large amount of data in short time. A high data bit rate pays for low latency which is highly desirable in the current application. Apart from providing high bandwidth for data communication, FSO communication has low susceptibility for interference, it is license-free and difficult to intercept.

An object of the present invention is thus to provide a method and a system to achieve a high level of traceability of operations done by a tool (7) on operation points (6a-c) on a workpiece (5) in a working site of a manufacturing facility. Part of the base station (10) utilize functionality that can be found e.g. in products known as "total stations". With such products, very precise measurements of distances and 'direction describing' angles are achieved with EDM means and theodolite means by directing a laser beam to a retro-reflecting item such as a prism. Said prism corresponds to said MRR structure (9) in the present invention. When said beam (12) is directed from said light source (4) to said MRR structure (9) and the base station (10) has detected that proper modulation of light is received by said light sensor (32), said base station determines that said light source (4) is pointed directly to said MRR structure (9). The location of said MRR structure (9) is then measured by said base station (10). Said EDM means (31) is used for measuring the distance, and said theodolite means (30) is used for determining the direction (i.e. the angles), from said light source (4) to said MRR structure (9). The location of the MRR structure (9) is calculated as space coordinates. The space coordinates may be 3D coordinates, i.e. x, y and z coordinates, but more preferably polar coordinates, i.e. r, θ and φ (where "r" is radial distance, "0" is polar angle and "φ" is azimuthal angle). The installation of the base station (10) must be done firmly in the working site with appropriate calibrations of the location measuring means to determine, with high accuracy, the space coordinates of said MRR structure (9) in relation to said base station (10). The workpiece (5), and if applicable also its carriage, must have a location that is well-defined in relation to said working site and said base station, thus the used coordinate system also involves said workpiece (5).

The location of said operation points (6a-c) on said workpiece (5) are already known in advance, in this invention, and are thus previously stored in said data memory means (3b) of said base station (10). Alternatively, if said workpiece (5) is moving on an assembly line or similar, arrays of space coordinates are stored together with arrays of time stamps representing movement of said operation points (6a-c) and said arrays describing the location of each operation point (6a-c) at any point in time.

If using only one set of location measurement means, said EDM means (31) or said theodolite means (30), one may still utilize some benefits of the invention, however with less accuracy. In such a simple interpretation of the invention, preferably polar coordinates are used. For determining location only by distance, i.e. by the EDM means, "r" (i.e. radial distance) is used. For determining location only by direction, i.e. by the theodolite means, "0" (i.e. polar angle) and "φ" (i.e. azimuthal angle) are used.

When a workpiece (5) has entered a working site, a trigger signal is sent for the base station (10) to be activated. The trigger signal could be a digital relay or digital input activated by sensors such as proximity sensors or obstructed photo cell beams detecting the workpiece. It could also be a signal from the upper level production system or from a line PLC having information on the general whereabouts of the workpieces or any other source sending said triggering signal to the base station (10). Said trigger signal uses state of the art technology and is not part of the disclosed invention.

When the base station (10) becomes activated, its task is first to search for said MRR structure (9) to find it. Said base station (10) controls the steering means (33) of the light source (4) to scan light on the volume covering said at least one operation point (6a) and its surroundings. The scanning light rays follow a predetermined scanning pattern and are exemplified in figure 1 as a zig-zag pattern (13) within a rectangular boundary (14), but they could also be defined by other movements (e.g. a spiral from smaller to larger circles) within other form of boundary (e.g. a circular boundary).

The purpose of said scanning is for said base station (10) to detect the presence of a light communication device of said tool (7). Said light communication device being in the form of an MRR structure (9). When detected, said light source (4) locks on said MRR structure (9) being the target. Said locking is managed by said light sensor (32) giving input to the steering means (33) of the base station when said light sensor (32) sensing the retro-reflected light. Said reflected light from said MRR structure (9) is detected by said light sensor (32) as a gaussian spot with a certain size, and said input consists of signals to said steering means (33) aiming to keep said spot in the middle of said light sensor. Hence, if said spot is detected as diverted from the middle of said light sensor, but still *is* detected by said light sensor, signals are sent from said light sensor (32) to said steering means (33) for adjusting the direction of said light to keep said retro-reflected light from said MRR structure (9) in the middle of said light sensor. If said light sensor (32) does not detect said retro-reflected light at all, the movement of said steering means (and said light from said light source) reverts to an searching scanning pattern, aimed for finding said MRR structure (9) as soon as possible.

When said light being focused on said MRR structure, the base station (10) measures and determines the location of said device (9) by means of the theodolite means (30) and/or the EDM means (31). In this situation, it is also time for said FSO communication link to be established.

In symmetrical FSO communication applications the communicating parts are similarly equipped with a signal source (emitter) and a signal detector (receiver) plus data processing means on both sides. Here, however, the link is asymmetrical, i.e. one part contains the light source (4), the light sensor (receiver) (32) plus some optics for providing the highly directional laser beam, and said part constitutes the interrogating part of the communication system together with said data processing means and said data memory. The other part of the FSO communication link, said MRR structure (9), is physically located on the tool (7) and electrically connected to the tool processing means (28). When said MRR structure (9) is hit by said light and detects the interrogating data, encryption of the signal takes place by means of the MRR structure (9) and the processing means (28) of the tool (7), and a beam with modulated encoded information is sent back to the interrogator. Thus, the MRR structure is the key component of the two communicating parts for modulating the signal according to the input data sequence, while ensuring that the beam will be reflected back in exactly the same direction, or more precisely in the direction defined by 180 degrees in relation to the original direction of the light from the light source (4). The idea behind using such an asymmetrical link instead of a symmetrical one is the strong requirement in the current environment of keeping the weight and complexity low at the tool side of the communication, as well as using a robust component - the MRR structure (9).

Suitable designs in the art of MRRs in FSO communication have been studied and successfully used, such as corner cube reflectors (CRR) or cat eye optics as MRR components.

As soon as light from said light source (4) has been locked onto said MRR structure (9) by the method described, data communication handshaking procedure starts between the base station (10) and said tool (7). Said handshaking procedure aiming to establish said FSO communication link. The data interchanged in said handshaking procedure is similar as handshaking procedures in any kind of data communication link and contain e.g. time synchronization and/or information on the identities of the two communicating parties. Other application relevant data may also be interchanged.

The system technical idea behind FSO communications using MRR units have been known for a long time, but it is not until recently that the development of the MRR technology has reached an interesting level. The design of many of them requires nanotechnology for which advanced research centers with skilled personnel and modern labs are necessary. Apart from being functioning in an FSO communication link in general, the MRR structure (9) and the processing means (28) of the tool (7) are required to have a sufficiently fast response time to the interrogating data from the base station (10) for establishing the FSO link in short time. Apart from other already mentioned important requirements on an MRR structure (9), integrated on a tool (7) as in the disclosed invention, like having low complexity and being light as well as robust, there are three specific topics that needs to be addressed:
1) The modulation capacity which defines the possible maximum bit rate in the established communication link
2) The FOV of the complete MRR structure which defines its general communication abilities when receiving incoming light from different directions in the point of view from the tool
3) The ability of the MRR structure to supply information on the orientation of said MRR structure to the base station, when receiving light from different directions in the point of view from the tool

High modulation capacity is achieved with multiple-quantum-well based electro-absorption modulators in MRR units. GaAs and InP based semiconductor technologies are used. Chosen communication bands have operational wavelengths of around 850 nm using GaAs and around 1550 nm using InP. Furthermore, to achieve a high bit rate it is also necessary for the MRR structure to be embedded in a tool system that is well designed in terms of system architecture and competitive hardware components (e.g. the processing means and other electronic components are required to be sufficiently fast) which is considered to be known to a person skilled in the art. To conclude, a high bit rate fulfills the needs described by topic no. 1 above.

Said MRR structure consists of at least one MRR unit. One MRR unit is enough for being part of an established FSO communication link, but the robustness of the solution in the invention benefits from using more than one MRR unit. More than one FSO communication sub link is then created between said MRR structure (9) and said base station (10), with one MRR unit in each FSO communication sub link. The described FSO communication link may thus consist of more than one FSO communication sub link.

In the following, an example of an MRR structure (9) consisting of multiple-quantum-well based modulating CCR units, will be described. The retro-reflecting type in the invention shall not be limited to corner cubes although it here serves as an example. Thus, in the following, the concepts 'CCR unit' and 'CCR array' are used as terms instead of the more generally 'MRR unit' and 'MRR structure' (the latter terminology are used in the claims). It is important to note however that the FOV is different among different modulating retro-reflector types. The FOV of an FSO communicating MRR unit is defined as the direction boundaries, from the MRR unit point of view, within which data communication via light is possible, i.e. within which the MRR unit 'sees' the light source. These boundaries are defined by the features of the specific type of retro-reflecting MRR unit.

Said CCR units are non-complex, robust, light and economically produced, however suffering from a FOV of about ±15 degrees. This FOV feature may falsely be considered disadvantageous in the current application. However, by arranging some small CCR units next to each other, forming an array in a certain 3-dimensional manner, a complete FOV is created which is larger than the FOV from a single CCR unit. The tool, with said CCR array firmly integrated on it, can thus be turned in many directions while maintaining communication via at least one of said FSO communication sub links. More specifically, depending on how the array is physically arranged, the complete FOV may also have any shape, adapted to the application so that data communication is enabled when the tool (7) is oriented in its most common ways.

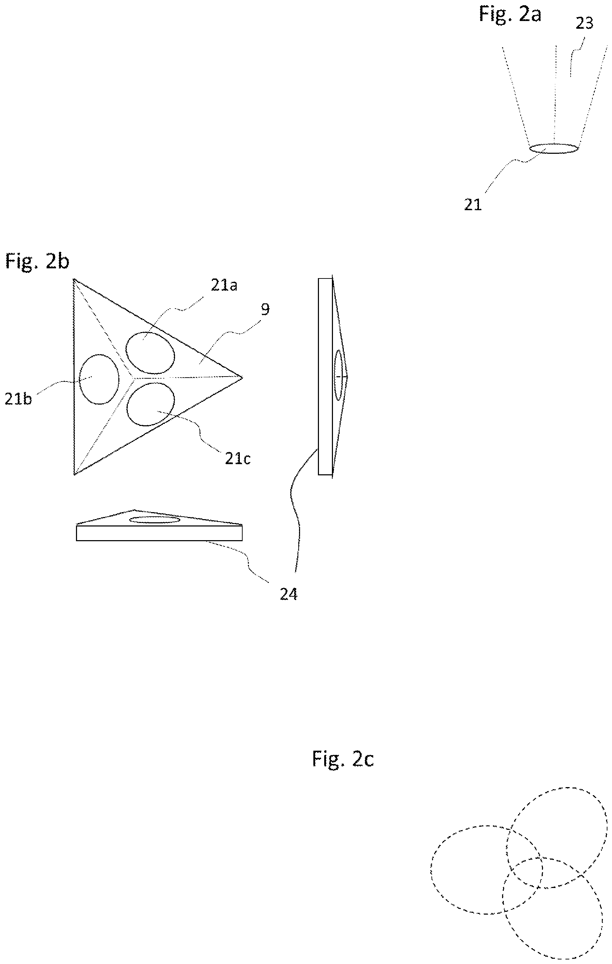

The different images of figures 2a-e shows examples of the features of two different CCR arrays consisting of arrays of single CCR units. Compounds of such CCR units are beneficial when the FOV of each unit is small. As is shown in figure 2a, each circular single CCR unit (21) has a FOV (23) of around ±15 degrees from the normal of its own plane, which implies a small FOV. In the example of fig. 2b the upper part of the CCR array (9) has the form of a rather flat tetrahedron and it consists of three CCR units (21a-c). The height of the tetrahedron is chosen so that the CCR units (21a-c) are integrated on the three tetrahedron planes turning upwards, but inclined to each other in such a way that their FOV:s are overlapping, yielding a FOV from the complete CCR array to be larger than ±15 degrees, as can be seen in fig. 2c, disposed in a pattern created by the special form of the CCR array (9) structure. Important is also that the virtual volume covered by the total FOV, at the point of view from the light sensor (32), is cohesive, i.e. it does not contain any holes, weak spots or similar. As is shown in fig. 2c, the FOV of a single "cone" forms an "ellipse" at a (virtual) plane parallel to the base plane (24) of said CCR array at a certain distance from said CCR array, since each CCR unit is inclined to the base plane. A large total FOV meets well the demands indicated in topic no. 2 above.

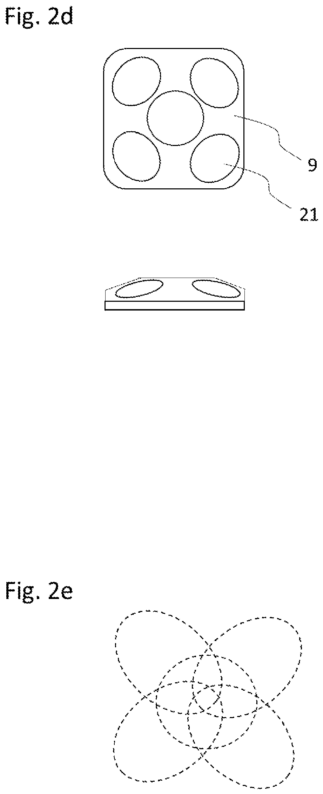

By modulating the reflected light from one or more identified CCR units, and not from CCR units whose FOV does not cover light from the light source, the base station (10) draws some conclusions (based on elimination) about the orientation of the CCR array, and thus the orientation of the tool (7). To this end, each CCR unit (21a, b, c) has its own unique identity and is connected to said processing means of said tool (7). The identity consists of an identification key, associated to each CCR unit, and said identification key is included in said FSO communication sub link between corresponding CCR unit and said base station (10). The FSO communicating sections of the structure of ellipses is used by the data processing means (3a) in the base station (10) to furthermore determine the orientation of the CCR array. E.g. if all CCR units in such a compound are communicating with the base station (10), the light source is located in the middle of the pattern of said total FOV shown in fig 2c, it is determined that the CCR array is oriented with its base plane more or less perpendicular to the light of said light source (4). An example of a more complex array of CCR units is shown in fig. 2d. Consequently, it yields a more complex FOV pattern, as is shown in fig. 2e, but implies also a larger total FOV and a more accurate determination of the CCR array orientation.

However, the orientation of said CCR array (and said tool) can never be fully determined with the described method only, as it is possible for said tool (7) to be "turned" around a vector from said CCR unit to said light source (4). It merely defines a certain inclination of said tool.

Therefore, the base station (10) also uses another method to determine the orientation of the CCR array (and thus the tool) which is the art of triangulation. By measuring the distance and direction to each CCR unit, by using the EDM means and the theodolite means, and by fully knowing the spatial relation between communicating CCR units, said orientation of sail tool is calculated. To this end, said spatial relations between communicating CCR units are stored as vector parameters in said data memory means (3b) of said base station (10). It shall also be mentioned that a CCR array may consist of more than one CCR unit where each unit is located a certain distance from each other and not included in the same "package", as is indicated by the embodiments of fig. 2a-e. Such concept is applicable when the size and shape of the tool supports it, but it implies a better accuracy when determining the tool orientation through triangulation.

Many involving CCR units makes a CCR array more complicated and heavier than an array with fewer units, but on the other hand a more reliable method for meeting said described topic no. 3 is discerned.

Having determined the orientation of the tool (7), and by knowing the position of the operation end (8) of the tool (7) in relation to said communication CCR units, an object of the invention is met: i.e. to achieve reliable traceability of said tool operation. The location of the operation end (8) is known by previously stored vector parameters in said data memory (27) in said tool, and in said data memory (3b) of said base station (10), said vector parameters refer to vectors between each CCR unit and said operation end (6a). However, to associate an operation with an operation point (6a) on a workpiece (5) there is a need to associate said operation point (6a) with the operation end (8) of the tool. For said calculation to be as accurate as possible, said orientation of said tool (7) needs to be determined as accurate as possible. It shall also be mentioned that if a CCR unit is located close to the operation end (8) and maintains an effective FSO communication sub link with the base station (10), topic no. 3 loses its importance as the tool orientation loses part of its importance. Being able to determine the location of that CCR unit (close to the operation end) a good opinion is achieved also regarding the location of said operation end. Such an example also reduces the need for using other CCR units in the CCR array, at least when it comes to topic no. 3; however, for topic no. 2, i.e. achieving a large FOV in general, it may still be important to have more than one CCR unit (or using a MRR unit with large FOV).

Many different three-dimensional structures with integrated CCR arrays would be able to provide different shapes and sizes of the FOV, all of which are embodiments of the disclosed invention. Depending on the wanted features for a certain application, the appropriate CCR array structure is chosen. The simplest CCR array is one which only contain one CCR unit (appropriately positioned as close to the operation end as possible). A small FOV is here compensated by low weight and low complexity, and it can be produced at a lower cost than more advanced structures.

Traceability: For a tool operation to be unambiguously associated with said operation point (6a), said operation end (8) of said tool (7) needs to be located sufficiently close to said operation point (6a) at the time of the creation of the operational result data. To this end, a parameter called "allowed association distance" is stored in advance of said operation in said data memory (3b) of said base station (10).

After having performed an operation, operational result data including magnitudes from at least one tool sensor and/or diagram data is created and stored in the storage means (27) of said tool (7). Said operational result data is sent from the tool (7) to the base station (10) via the existing FSO communication link. The coordinates of the tool's operation end (8), now known to the base station (10), are stored together with said operational result data as linked posts in said data memory (3b). Said base station (10) now uses the 'allowed association distance' value for determining whether at least one operation point can be connected (i.e. associated) to said posts. If there are none, said allowed association distance may be too small; if there are more than one, it may be too big. A goal for the invention is to enable the connection/association of one ambiguous operation point (6a) to each operation. Complete operational result data including location data and operation point identity is then transmitted to the upper level production system (1) via the plant network (2). This is how the described method provides traceability of the performed tool operations, at least for the operations performed during the time when an FSO communication link is maintained.

If, for some reason, said FSO communication link goes down prior to said operation causing said operation to be performed without an available FSO communication link, said base station may also continuously send determined location of said tool's operation end (8) to said tool (7) when said FSO communication link exists for the tool to be updated frequently on its whereabouts. Then, at the failure of said FSO communication link, the probability increases for the tool to store its operational result data together with the location of its operation end in said tool's own data memory (27) as linked posts, thereby maintaining traceability. In this scenario, the tool must not move much after the failing FSO communication link to be effective.

In another embodiment of the invention, the system may also be used to achieve control of a tool operation that said tool (7) performs at an operation point (6a) on a workpiece (5). In this embodiment said tool is normally disabled from performing any operation at all when said tool is located more than an 'allowed association distance' from said operation point (6a) covered by the light source (4). In this embodiment, said tool is enabled for performing an operation only when said tool operation end (8) is located less than said allowed association distance from said operation point (6a). For unambiguous reasons, in this embodiment it is important that only one operation point (6a) is 'associated' to said operation end (8) of said tool (7) before enabling said tool (7) for operation. Said tool enabling data consisting of either all necessary production data adapted for said operation point (6a), or, when the tool already has the correct parameter settings in general, said data merely consisting of a tool enabling signal. Note; if more than one operation point (e.g. 6a-c) all have same requirements regarding production data, and more detailed traceability is not necessary, the allowed association distance may be set to a larger value.

The operational result data is sent from the tool (7) to said base station (10) directly after said operation, via said full duplex FSO communication link. Packaged together with the identity of the corresponding operation point (6a) or points (e.g. 6a-c) the complete operational result data is further transferred to said upper level production system (1). Control of the tool operation has been achieved.

An upper level production system sending production data to a tool short before a tool operation, and receiving tool result data short after the operation, with full traceability, implies a flexible and an efficient production process where decisions by the upper level production system on what tool operations to be performed can be done at the right time, according to the just-in-time production philosophy which constitutes the conditions for low set times in modern LEAN manufacturing. If the data communication is done wirelessly with the benefits of FSO communication compared to RF communication technology, the advantages of the disclosed invention are undoubtful.

## Claims

1. A tool (7) configured to perform an operation on an operation point (6a), said tool comprising:
- at least one sensor for producing operational tool result data at the performance of a tool operation,
- a data memory (27) where operational data is stored,
- a Modulating Retro-Reflector structure, hereinafter referred to as MRR structure (9) being configured to, in use, transmit and receive data in an asymmetrical Free Space Optical communication link (12),
- processing means (28) configured to process said data, and to send said data via said Free Space Optical communication (12) link by modulating signals in said MRR structure (9)
- said MRR structure (9) consisting of at least one Modulating Retro-Reflector unit, hereinafter referred to as MRR unit (21)

2. A base station (10) configured to, as the interrogating part, establish a Free Space Optical communication link (12) with, as the other part, an MRR structure (9) on a tool (7) according to claim 1, said base station (10) comprising:
- a directional light source (4) for transmitting light and a light sensor (32), said light sensor (32) being positioned to detect retro-reflected light from said MRR structure (9) when said directional light (4) is directed to said MRR structure (9),
- data processing means (3a) for processing tool operational result data received via said Free Space Optical communication link (12), and for processing tool operational data to be sent via said Free Space Optical communication link (12),
- a data memory (3b) where operational result data from said tool (7) is stored by said data processing means (3a), after having received said operational result data via said Free Space Optical communication link (12)

3. A method for communicating data in an asymmetrical Free Space Optical communication link (12) between a base station (10) according to claim 2 and a tool (7) according to claim 1 in a working site, said tool performing at least one operation on at least one operation point (6a, 6b, 6c) on a workpiece (5) in said working site, said base station (10) constituting the interrogating part of said Free Space Optical link (12), said tool constituting the other part of said Free Space Optical link, the method comprising:
- tool operational data is transferred between said tool (7) and said base station (10) via said established Free Space Optical communication link (12)

4. A method as claimed in claim 3 further comprising:
- said base station (10) containing steering means (33) for directing light from said light source in different directions at different angles from an initial direction, and said steering means (33) is controlled by said data processing means (30) in said base station (10),
- said steering means (33) directing light from said light source (4) according to a predetermined scanning pattern (13) for scanning a volume prior to the establishment of said Free Space Optical communication link (12),
- when modulated retro-reflected light from said MRR structure (9) is detected by said light sensor (32) during scanning, said base station is alerted,
- said base station locking light onto said MRR structure by means of said data processing means (3a) sending corrective signals from said light sensor to said steering means (33) for tracking said MRR structure (9), when said light sensor (32) detecting a divergence of said retro-reflected light from said MRR structure (9),
- said base station (10) and said MRR structure (9) establishing said Free Space Optical link (12) when said light has been locked onto said MRR structure (9) by said base station (10)

5. A method as claimed in claim 3 or 4 further comprising:
- said base station containing electric distance measuring means (31), for measuring the location of said MRR structure (9) when light reflected from said MRR structure (9) is detected by said light sensor (32) in said base station (10),
- said electric distance measurement means (31) measuring the location in the form of distance from said light source (4) to said MRR structure (9),
- data from said measurement is stored in said data memory (3b) in said base station (10)

6. A method as claimed in any of claims 3 - 5 further comprising:
- said tool (7) also comprising a tool data memory (27) where said tool processing means (28) storing operational data,
- said tool (7) furthermore containing at least one sensor that produces operational result data at the performance of a tool operation,
- said tool data processing means (28) storing said operational result data in said tool data memory (27),
- said tool data processing means (28) sending said operational result data to said base station (10) via said Free Space Optical link (12),
- said data processing means (3a) in said base station storing said received operational result data and said location data of said MRR structure (9) as linked posts in said data memory (3b) in said base station (10)

7. A method as claimed in any of claims 3 - 6 further comprising:
- said MRR structure (9) on said tool (7) consists of at least one MRR unit (21) having a limited field-of-view (23), and said established Free Space Optical communication link (12) consists of at least one Free Space Optical communication sub link established between said at least one communicating MRR unit (21) and said base station,
- a unique identification key of said at least one MRR unit (21) is included in said corresponding Free Space Optical communication sub link, when said at least one MRR unit (21) is communicating with said base station (10),
- said measuring of said location of said MRR structure (9) consists of measuring the location of said at least one MRR unit (21),
- in said data memory (3b) in said base station (10), and in advance to a tool operation at said at least one operation point (6a, 6b, 6c) on at least one workpiece (5), the following data have been stored:
o location data of at least one operation point (6a, 6b, 6c),
o location data of the operation end (8) of said tool (7) in relation to said MRR structure (9) on said tool (7),
o a maximum allowed association distance between said location of said operation end (8) and said location of at least one operation point (6a, 6b, 6c)

8. A method as claimed in any of claims 3 - 7 further comprising:
- said base station (10) calculating the location data of said operation end (8) of said tool (7), based on said location data of said at least one identified MRR unit (21) that is present in the data communication of said established Free Space Optical communication link (12),
- said base station (10) comparing said location data of said operation end (8) with said location data of at least one operation point (6a, 6b, 6c) on the current workpiece (5),
- said base station (10) determining whether at least one operation point (6a, 6b, 6c) is to be associated to said tool operation, based on said maximum allowed association distance,
- said base station (10) logging said determination by linking said already linked posts to any operation point (6a, 6b, 6c) that is determined to fall within said allowed association distance, and by not linking said already linked posts to any operation point that is determined to be located outside of said allowed association distance

9. A tool (7) as claimed in claim 1 further comprising:
- said at least one MRR unit (21) having a unique identity and being positioned well-defined in relation (11) to the operation end (8) of said tool (7),
- said at least one MRR unit (21) being connected to said processing means (28),
- said at least one MRR unit (21) configured to communicate in a Free Space Optical communication link (12),
- said MRR structure (9) being arranged on said tool (7) in a way that makes the total field-of-view of the MRR structure (9) to be cohesive for a Free Space Optical communicating counterpart

10. A tool (7) as claimed in claim 1 or 9 further comprising:
- said at least one MRR unit (21) consisting of electro-absorption modulators with 'multiple quantum wells',
- said at least one MRR unit (21) containing GaAs or InP based semiconductors

11. A base station (10) as claimed in claim 2, further comprising:
- steering means (33) for directing light from said directional light source (4) in different directions, said steering means (33) being controlled by said data processing means (3a) in said base station (10),
- said light sensor (32) configured for detecting a divergence of said retro-reflected light from saic MRR structure (9),
- said data processing means (3a) being connected to light sensor (32) and said steering means (33), and said data processing means (3a) configured for sending corrective signals
from said light sensor (32) to said steering means (33) to minimize said divergence

12. A base station (10) as claimed in claim 2 or 11, further comprising:
- electronic distance measurement means (31) for measuring distance from said light source (4) to said MRR structure (9) by analysing retro-reflected light from said MRR structure (9),
- said data processing means (3a) configured for storing data from said electric distance measurements in said data memory (3b) in said base station (10)

13. A system comprising:
- at least one tool (7) according to claim 1, 9 or 10,
- at least one base station (10) according to claim 2, 11 or 12,
- an upper level production system (1) connected to said at least one base station (10) via a network (2),
- said upper level production system (1) configured for controlling said at least one tool operation by sending instructions to said corresponding base station (10),
- said upper level production system (1) also configured for receiving operational result data from said at least one tool (7) via said corresponding base station (10)

## Patentansprüche

1. Werkzeug (7), das konfiguriert ist, um einen Vorgang an einem Arbeitspunkt (6a) durchzuführen, wobei das Werkzeug aufweist:
- mindestens einen Sensor zum Erzeugen von Ergebnisdaten des operativen Werkzeugs beim Durchführen eines Werkzeugvorgangs,
- einen Datenspeicher (27), in dem die Betriebsdaten gespeichert sind,
- eine modulierende Retro-Reflektor-Struktur, die im Folgenden MRR-Struktur (9) genannt wird, die konfiguriert ist, um im insatz Daten in einer asymmetrischen optischen Freiraum Kommunikationsverbindung (12) zu senden und zu empfangen,
- Verarbeitungsmittel (28), die konfiguriert sind, um die Daten zu verarbeiten und die Daten über die optische Freiraum-Kommunikationsverbindung (12) zu senden, indem sie Signale in der MRR-Struktur (9) modulieren,
- wobei die MRR-Struktur (9) aus mindestens einer modulierenden Retroreflektoreinheit besteht, die im Folgenden MRR-Einheit (21) genannt wird.

2. Basisstation (10), die konfiguriert ist, um als das abfragende Teil eine optische Freiraum-Kommunikationsverbindung (12) mit einer MRR-Struktur (9) als das andere Teil auf einem Werkzeug (7) nach Anspruch 1 einzurichten, wobei die Basisstation (10) aufweist:
- eine gerichtete Lichtquelle (4) zum Übertragen von Licht und einen Lichtsensor (32), wobei der Lichtsensor (32) positioniert ist, um retroreflektiertes Licht von der MRR-Struktur (9) zu erkennen, wenn das gerichtete Licht (4) auf die MRR-Struktur (9) gerichtet ist,
- Datenverarbeitungsmittel (3a) zum Verarbeiten von Betriebsergebnisdaten des Werkzeugs, die über die optische Freiraum-Kommunikationsverbindung (12) empfangen werden, und zum Verarbeiten von Betriebsergebnisdaten des Werkzeugs, die über die optische Freiraum-Kommunikationsverbindung (12) zu senden sind,
- einen Datenspeicher (3b), in dem Betriebsergebnisdaten von dem Werkzeug (7) durch die Datenverarbeitungsmittel (3a) gespeichert werden, nachdem sie die Betriebsergebnisdaten über die optische Freiraum-Kommunikationsverbindung (12) empfangen haben.

3. Verfahren zur Datenkommunikation in einer asymmetrischen optischen Freiraum-Kommunikationsverbindung (12) zwischen einer Basisstation (10) nach Anspruch 2 und einem Werkzeug (7) nach Anspruch 1 an einer Arbeitsstelle, wobei das Werkzeug mindestens einen Vorgang an mindestens einem Arbeitspunkt (6a, 6b, 6c) an einem Werkstück (5) an der Arbeitsstelle durchführt, wobei die Basisstation (10) das abfragenden Teil der optischen Freiraumverbindung (12) bildet, wobei das Werkzeug das andere Teil der optischen Freiraumverbindung bildet, wobei das Verfahren aufweist:
- die Tatsache, dass Werkzeugbetriebsdaten zwischen dem Werkzeug (7) und der Basisstation (10) über die eingerichtete optische Freiraum-Kommunikationsverbindung (12) übertragen werden.

4. Verfahren nach Anspruch 3, ferner umfassend:
- die Tatsache, dass die Basisstation (10) Lenkmittel (33) aufweist, um Licht von der Lichtquelle in verschiedene Richtungen unter verschiedenen Winkeln von einer Ausgangsrichtung zu lenken, und die Lenkmittel (33) durch die Datenverarbeitungsmittel (30) in der Basisstation (10) gesteuert werden,
- wobei die Lenkmittel (33) Licht von der Lichtquelle (4) entsprechend einem vorgegebenen Abtastmuster (13) zum Abtasten eines Volumens vor dem Einrichten der optischen Freiraum-Kommunikationsverbindung (12) lenken,
- wenn moduliertes retroreflektiertes Licht von der MRR-Struktur (9) durch den Lichtsensor (32) während des Abtastens erfasst wird, wird die Basisstation alarmiert,
- wobei die Basisstation Licht in die MRR-Struktur dadurch einkoppelt, dass die Datenverarbeitungsmittel (3a) Korrektursignale von dem Lichtsensor zu den Lenkmitteln (33) senden, um die MRR-Struktur (9) zu verfolgen, wenn der Lichtsensor (32) eine Abweichung des retroreflektierten Lichts von der MRR-Struktur (9) erkennt,
- wobei die Basisstation (10) und die MRR-Struktur (9) die optische Freiraumverbindung (12) einrichten, wenn das Licht durch die Basisstation (10) in die MRR-Struktur (9) eingekoppelt worden ist.

5. Verfahren nach Anspruch 3 oder 4, ferner umfassend:
- die Tatsache, dass die Basisstation elektrische Entfernungsmessmittel (31) zum Messen des Standorts der MRR-Struktur (9) aufweist, wenn von der MRR-Struktur (9) reflektiertes Licht von dem Lichtsensor (32) in der Basisstation (10) erfasst wird,
- wobei die elektrischen Entfernungsmessmittel (31) den Standort in Form einer Entfernung von der Lichtquelle (4) zu der MRR-Struktur (9) messen,
- wobei die Daten von der Messung in dem Datenspeicher (3b) in der Basisstation (10) gespeichert werden.

6. Verfahren nach einem der Ansprüche 3 bis 5, ferner umfassend die Tatsache, dass:
- das Werkzeug (7) auch einen Werkzeugdatenspeicher (27) aufweist, in dem die Mittel zum Verarbeiten der Werkzeugdaten (28) Betriebsdaten speichern,
- das Werkzeug (7) ferner mindestens einen Sensor aufweist, der Betriebsergebnisdaten beim Durchführen eines Werkzeugvorgangs erzeugt,
- die Mittel zum Verarbeiten der Werkzeugdaten (28) die Betriebsergebnisdaten in dem Werkzeugdatenspeicher (27) speichern,
- die Mittel zum Verarbeiten der Werkzeugdaten (28) die Betriebsergebnisdaten über die optische Freiraumverbindung (12) an die Basisstation (10) senden,
- wobei die Datenverarbeitungsmittel (3a) in der Basisstation die empfangenen Betriebsergebnisdaten und die Standortdaten der MRR-Struktur (9) als verknüpfte Posten in dem Datenspeicher (3b) in der Basisstation (10) speichern.

7. Verfahren nach einem der Ansprüche 3 bis 6, ferner umfassend die Tatsache, dass:
- die MRR-Struktur (9) auf dem Werkzeug (7) aus mindestens einer MRR-Einheit (21) mit einem eingeschränkten Sichtfeld (23) besteht und die eingerichtete optische Freiraum-Kommunikationsverbindung (12) aus mindestens einer optischen Freiraum-Kommunikations-Sub-Verbindung besteht, die zwischen der mindestens einen kommunizierenden MRR-Einheit (21) und der Basisstation eingerichtet ist,
- ein eindeutiger Identifikationsschlüssel der mindestens einen MRR-Einheit (21) in der entsprechenden optischen Freiraum-Kommunikations-Sub-Verbindung enthalten ist, wenn die mindestens eine MRR-Einheit (21) mit der Basisstation (10) kommuniziert,
- das Messen des Standorts der MRR-Struktur (9) darin besteht, den Standort der mindestens einen MRR-Einheit (21) zu messen,
- in dem Datenspeicher (3b) in der Basisstation (10) und vor einem Werkzeugvorgang an dem mindestens einen Arbeitspunkt (6a, 6b, 6c) an mindestens einem Werkstück (5) die folgenden Daten gespeichert worden sind:
o Standortdaten von mindestens einem Arbeitspunkt (6a, 6b, 6c),
o Standortdaten des Endes des Vorgangs (8) des Werkzeugs (7) in Bezug auf die MRR-Struktur (9) auf dem Werkzeug (7),
o eine maximal zulässige Verbindungsentfernung zwischen dem Standort des Endes des Vorgangs (8) und dem Standort mindestens eines Arbeitspunkts (6a, 6b, 6c).

8. Verfahren nach einem der Ansprüche 3 bis 7, ferner umfassend die Tatsache, dass:
- die Basisstation (10) die Standortdaten des Endes des Vorgangs (8) des Werkzeugs (7) basierend auf den Standortdaten der mindestens einen identifizierten MRR-Einheit (21) berechnet, die in der Datenkommunikation der eingerichteten optischen Freiraum-Kommunikationsverbindung (12) vorhanden ist,
- die Basisstation (10) die Standortdaten des Endes des Vorgangs (8) mit den Standortdaten des mindestens einen Arbeitspunkts (6a, 6b, 6c) am aktuellen Werkstück (5) vergleicht,
- die Basisstation (10) bestimmt, ob mindestens ein Arbeitspunkt (6a, 6b, 6c) mit dem Werkzeugvorgang basierend auf der maximal zulässigen Verbindungsentfernung verbunden werden muss,
- die Basisstation (10) dieses Bestimmen durch Verknüpfen der bereits verknüpften Posten mit einem beliebigen Arbeitspunkt (6a, 6b, 6c) aufzeichnet, von dem bestimmt wird, dass er in die zulässige Verbindungsentfernung fällt, und durch nicht Verknüpfen der bereits verknüpften Posten mit einem beliebigen Arbeitspunkt, der als außerhalb der zulässigen Verbindungsentfernung liegend bestimmt wird.

9. Werkzeug (7) nach Anspruch 1, ferner umfassend die Tatsache, dass:
- die mindestens eine MRR-Einheit (21) eine eindeutige Identität hat und in Bezug (11) auf das Ende des Vorgangs (8) des Werkzeugs (7) wohldefiniert positioniert ist,
- die mindestens eine MRR-Einheit (21) mit den Mitteln zum Verarbeiten (28) verbunden ist,
- die mindestens eine MRR-Einheit (21) konfiguriert ist, um in einer optischen Freiraum-Kommunikationsverbindung (12) zu kommunizieren,
- die MRR-Struktur (9) auf dem Werkzeug (7) derart angeordnet ist, dass das gesamte Sichtfeld der MRR-Struktur (9) für ein Gegenstück für optische Freiraum-Kommunikation kohärent ist.

10. Werkzeug (7) nach Anspruch 1 oder 9, ferner umfassend die Tatsache, dass:
- die mindestens eine MRR-Einheit (21) aus Elektroabsorptionsmodulatoren mit "Mehrfach-Quantentöpfen" besteht,
- die mindestens eine MRR-Einheit (21) GaAs- oder InP-basierte Halbleiter enthält.

11. Basisstation (10) nach Anspruch 2, ferner umfassend:
- Lenkmittel (33) zum Lenken von Licht von der gerichteten Lichtquelle (4) in verschiedene Richtungen, wobei die Lenkmittel (33) von den Datenverarbeitungsmitteln (3a) in der Basisstation (10) gesteuert werden,
- der Lichtsensor (32) zum Erkennen einer Abweichung des retroreflektierten Lichts von der MRR-Struktur (9) konfiguriert ist,
- wobei die Datenverarbeitungsmittel (3a) mit dem Lichtsensor (32) und den Lenkmitteln (33) verbunden sind und die Datenverarbeitungsmittel (3a) zum Senden von Korrektursignalen von dem Lichtsensor (32) an die Lenkmittel (33) konfiguriert sind, um die Abweichung zu minimieren.

12. Basisstation (10) nach Anspruch 2 oder 11, ferner umfassend:
- elektronische Entfernungsmessmittel (31) zum Messen der Entfernung von der Lichtquelle (4) zu der MRR-Struktur (9) durch Analysieren von retroreflektiertem Licht von der MRR-Struktur (9),
- die Tatsache, dass die Datenverarbeitungsmittel (3a) konfiguriert sind, um Daten von den elektrischen Entfernungsmessungen in dem Datenspeicher (3b) in der Basisstation (10) zu speichern.

13. System, umfassend:
- mindestens ein Werkzeug (7) nach Anspruch 1, 9 oder 10,
- mindestens eine Basisstation (10) nach Anspruch 2, 11 oder 12,
- ein übergeordnetes Produktionssystem (1), das über ein Netzwerk (2) mit der mindestens einen Basisstation (10) verbunden ist,
- wobei das übergeordnete Produktionssystem (1) konfiguriert ist, um den mindestens einen Werkzeugvorgang durch Senden von Anweisungen an die entsprechende Basisstation (10) zu steuern,
- wobei das übergeordnete Produktionssystem (1) auch konfiguriert ist, um Betriebsergebnisdaten von dem mindestens einen Werkzeug (7) über die entsprechende Basisstation (10) zu empfangen.

## Revendications

1. Un outil (7) configuré pour effectuer une opération sur un point d'opération (6a), ledit outil comprenant :
- au moins un capteur pour produire des données de résultat d'outil opérationnel lors de l'exécution d'une opération d'outil,
- une mémoire de données (27) dans laquelle sont stockées les données opérationnelles,
- une structure formant Rétro-Réflecteur Modulant, ci-après dénommée structure MRR (9), qui est configurée pour, lors de l'utilisation, transmettre et recevoir des données dans une liaison de communication optique en espace libre asymétrique (12),
- des moyens de traitement (28) configurés pour traiter lesdites données, et pour envoyer lesdites données via ladite liaison de communication optique en espace libre (12) en modulant des signaux dans ladite structure MRR (9),
- ladite structure MRR (9) étant constituée par au moins une unité formant rétro-réflecteur modulant, ci-après dénommée unité MRR (21).

2. Une station de base (10) configurée pour, en tant que partie interrogatrice, établir une liaison de communication optique en espace libre (12) avec, en tant qu'autre partie, une structure MRR (9) sur un outil (7) selon la revendication 1, ladite station de base (10) comprenant :
- une source (4) de lumière directionnelle pour transmettre de la lumière et un capteur de lumière (32), ledit capteur de lumière (32) étant positionné pour détecter la lumière rétro-réfléchie depuis ladite structure MRR (9) lorsque ladite lumière directionnelle (4) est orientée vers ladite structure MRR (9),
- des moyens (3a) de traitement de données pour traiter des données de résultat opérationnel d'outil reçues via ladite liaison de communication optique en espace libre (12), et pour traiter des données opérationnelles d'outil destinées à être envoyées via ladite liaison de communication optique en espace libre (12),
- une mémoire de données (3b) dans laquelle les données de résultat opérationnel provenant dudit outil (7) sont stockées par lesdits moyens (3a) de traitement de données, après avoir reçu lesdites données de résultat opérationnel via ladite liaison de communication optique en espace libre (12).

3. Un procédé de communication de données dans une liaison de communication optique en espace libre asymétrique (12) entre une station de base (10) selon la revendication 2 et un outil (7) selon la revendication 1 dans un site de travail, ledit outil effectuant au moins une opération sur au moins un point d'opération (6a, 6b, 6c) sur une pièce à travailler (5) dans ledit site de travail, ladite station de base (10) constituant la partie d'interrogation de ladite liaison optique en espace libre (12), ledit outil constituant l'autre partie de ladite liaison optique en espace libre, le procédé comprenant :
- le fait que des données opérationnelles d'outil sont transférées entre ledit outil (7) et ladite station de base (10) via ladite liaison de communication optique en espace libre (12) établie.

4. Un procédé tel que revendiqué dans la revendication 3, comprenant en outre :
- le fait que ladite station de base (10) contient des moyens d'orientation (33) pour orienter la lumière provenant de ladite source de lumière dans différentes directions selon des angles différents à partir d'une direction initiale, et lesdits moyens d'orientation (33) sont commandés par lesdits moyens de traitement de données (30) dans ladite base station (10),
- lesdits moyens d'orientation (33) orientant la lumière provenant de ladite source lumineuse (4) selon un motif de balayage prédéterminé (13) pour balayer un volume avant l'établissement de ladite liaison de communication optique en espace libre (12),
- lorsque la lumière rétro-réfléchie modulée provenant de ladite structure MRR (9) est détectée par ledit capteur de lumière (32) pendant le balayage, ladite station de base est alertée,
- ladite station de base verrouillant la lumière sur ladite structure MRR par le fait que lesdits moyens (3a) de traitement de données envoient des signaux de correction provenant dudit capteur de lumière vers lesdits moyens d'orientation (33) pour opérer un tracking de ladite structure MRR (9), lorsque ledit capteur de lumière (32) détecte une divergence de ladite lumière rétro-réfléchie provenant de ladite structure MRR (9),
- ladite station de base (10) et ladite structure MRR (9) établissant ladite liaison optique en espace libre (12) lorsque ladite lumière a été verrouillée sur ladite structure MRR (9) par ladite station de base (10).

5. Un procédé tel que revendiqué dans la revendication 3 ou la revendication 4 comprenant en outre :
- le fait que ladite station de base contient des moyens électriques (31) de mesure de distance, pour mesurer l'emplacement de ladite structure MRR (9) lorsque la lumière réfléchie par ladite structure MRR (9) est détectée par ledit capteur de lumière (32) dans ladite station de base (10),
- lesdits moyens électriques (31) de mesure de distance mesurant l'emplacement sous la forme d'une distance entre ladite source de lumière (4) et ladite structure MRR (9),
- les données de ladite mesure sont stockées dans ladite mémoire de données (3b) dans ladite station de base (10).

6. Un procédé tel que revendiqué dans l'une quelconque des revendications 3 à 5 comprenant en outre le fait que :
- ledit outil (7) comprend également une mémoire de données d'outil (27) dans laquelle lesdits moyens (28) de traitement de données d'outil stockent des données opérationnelles,
- ledit outil (7) contient en outre au moins un capteur qui produit des données de résultat opérationnel lors de l'exécution d'une opération d'outil,
- lesdits moyens (28) de traitement de données d'outil stockent lesdites données de résultat opérationnel dans ladite mémoire de données d'outil (27),
- lesdits moyens (28) de traitement de données d'outil envoient lesdites données de résultat opérationnel à ladite station de base (10) via ladite liaison optique en espace libre (12),
- lesdits moyens (3a) de traitement de données dans ladite station de base stockant lesdites données de résultat opérationnel reçues et lesdites données d'emplacement de ladite structure MRR (9) en tant qu'envois liés dans ladite mémoire de données (3b) dans ladite station de base (10).

7. Un procédé tel que revendiqué dans l'une quelconque des revendications 3 à 6, comprenant en outre le fait que :
- ladite structure MRR (9) sur ledit outil (7) consiste en au moins une unité MRR (21) ayant un champ de vision limité (23), et ladite liaison de communication optique en espace libre (12) établie consiste en au moins une sous-liaison de communication optique en espace libre établie entre ladite au moins une unité MRR communicante (21) et ladite station de base,
- une clé d'identification unique de ladite au moins une unité MRR (21) est incluse dans ladite sous-liaison de communication optique en espace libre correspondante, lorsque ladite au moins une unité MRR (21) communique avec ladite station de base (10),
- ladite mesure dudit emplacement de ladite structure MRR (9) consiste à mesurer l'emplacement de ladite au moins une unité MRR (21),
- dans ladite mémoire de données (3b) dans ladite station de base (10), et avant une opération d'outil audit au moins un point d'opération (6a, 6b, 6c) sur au moins une pièce à travailler (5), les données qui suivent ont été stockées :
o des données d'emplacement d'au moins un point d'opération (6a, 6b, 6c),
o des données d'emplacement de l'extrémité opérante (8) dudit outil (7) par rapport à ladite structure MRR (9) sur ledit outil (7),
o une distance d'association maximale autorisée entre ledit emplacement de ladite extrémité opérante (8) et ledit emplacement d'au moins un point d'opération (6a, 6b, 6c).

8. Un procédé tel que revendiqué dans l'une quelconque des revendications 3 à 7, comprenant en outre le fait que :
- ladite station de base (10) calcule les données d'emplacement de ladite extrémité opérante (8) dudit outil (7), sur la base desdites données d'emplacement de ladite au moins une unité MRR identifiée (21) qui est présente dans la communication de données de ladite liaison de communication optique en espace libre (12) établie,
- ladite station de base (10) compare lesdites données d'emplacement de ladite extrémité opérante (8) avec lesdites données d'emplacement d'au moins un point d'opération (6a, 6b, 6c) sur la pièce (5) en cours de travail,
- ladite station de base (10) détermine si au moins un point d'opération (6a, 6b, 6c) doit être associé à ladite opération d'outil, sur la base de ladite distance d'association maximale autorisée,
- ladite station de base (10) enregistre ladite détermination en reliant lesdits envois déjà liés à tout point opérationnel (6a, 6b, 6c) qui est déterminé comme se trouvant dans ladite distance d'association autorisée, et en ne reliant lesdits envois déjà liés à tout point opérationnel qui est déterminé comme étant situé à l'extérieur de ladite distance d'association autorisée.

9. Un outil (7) tel que revendiqué dans la revendication 1, comprenant en outre le fait que :
- ladite au moins une unité MRR (21) a une identité unique et est positionnée de façon bien définie par rapport (11) à l'extrémité opérante (8) dudit outil (7),
- ladite au moins une unité MRR (21) est connectée auxdits moyens de traitement (28),
- ladite au moins une unité MRR (21) est configurée pour communiquer dans une liaison de communication optique en espace libre (12),
- ladite structure MRR (9) est agencée sur ledit outil (7) d'une manière qui rend le champ de vision total de la structure MRR (9) cohérent pour une contrepartie communicante optique en espace libre.

10. Un outil (7) tel que revendiqué dans la revendication 1 ou la revendication 9, comprenant en outre le fait que :
- ladite au moins une unité MRR (21) consiste en des modulateurs à électro-absorption à "puits quantiques multiples",
- ladite au moins une unité MRR (21) contient des semi-conducteurs à base de GaAs ou InP.

11. Une station de base (10) tel que revendiquée dans la revendication 2, comprenant en outre :
- des moyens d'orientation (33) pour orienter de la lumière provenant de ladite source (4) de lumière directionnelle dans différentes directions, lesdits moyens d'orientation (33) étant commandés par lesdits moyens (3a) de traitement de données dans ladite station de base (10),
- ledit capteur de lumière (32) est configuré pour détecter une divergence de ladite lumière rétro-réfléchie depuis ladite structure MRR (9),
- lesdits moyens (3a) de traitement de données sont connectés au capteur de lumière (32) et auxdits moyens d'orientation (33), et lesdits moyens (3a) de traitement de données sont configurés pour envoyer des signaux correctifs depuis ledit capteur de lumière (32) vers lesdits moyens d'orientation (33) pour minimiser ladite divergence.

12. Une station de base (10) tel que revendiquée dans la revendication 2 ou la revendication 11, comprenant en outre :
- des moyens électroniques (31) de mesure de distance pour mesurer la distance entre ladite source de lumière (4) et ladite structure MRR (9) en analysant la lumière rétro-réfléchie depuis ladite structure MRR (9),
- le fait que lesdits moyens (3a) de traitement de données sont configurés pour stocker des données provenant desdites mesures électriques de distance dans ladite mémoire de données (3b) dans ladite station de base (10).

13. Un système comprenant :
- au moins un outil (7) selon la revendication 1, la revendication 9 ou la revendication 10,
- au moins une station de base (10) selon la revendication 2, la revendication 11 ou la revendication 12,
- un système de production de niveau supérieur (1) connecté à ladite au moins une station de base (10) via un réseau (2),
- ledit système de production de niveau supérieur (1) étant configuré pour commander ladite au moins une opération d'outil en envoyant des instructions à ladite station de base correspondante (10),
- ledit système de production de niveau supérieur (1) étant également configuré pour recevoir des données de résultat opérationnel en provenance dudit au moins un outil (7) via ladite station de base (10) correspondante.
